# EUROPEAN PATENT APPLICATION

(11) **EP 3 771 738 A1**
(43) Date of publication of application: **03.02.2021**
(21) Application number: 19189168.8
(22) Date of filing: 30.07.2019
(51) Int. Cl.: C10G 2/00, C08H 8/00, C10J 3/00

(54) **A METHOD TO CONVERT A CELLULOSIC FRACTION INTO FISCHER TROPSCH PRODUCTS, USING A LIGNOCELLULOSIC RAW MATERIAL BASED PROCESS FOR PRODUCTION OF SYNTHETIC GAS**

(71) Applicant: Delmas, Michel, 31320 Auzeville-Tolosane (FR)
(72) Inventor: Delmas, Michel, 31320 Auzeville-Tolosane (FR)
(74) Representative: Aquinov

(57) **Abstract**

The invention proposes a method comprising (i) using a lignocellulosic raw material based process for production of synthetic gas; (ii) introducing the syngas to a Fischer-Tropsch (FT) catalytic synthesis (FTS) process and generating Fischer-Tropsch products, wherein the synthetic gas production process comprises the steps a) extracting lignins and hemicelluloses by putting solid lignocellulosic raw material in contact with a mixture composed of at least water and formic acid, at atmospheric pressure under temperature between 80°C and 110°C, b) fractionating the obtained primary solid fraction (PSF) and primary liquid fraction (PLF); c) recovering and obtaining an intermediate liquid fraction (ILF); d) separating the lignins; e) gasifying at least part of said primary solid fraction (PSF) for producing synthetic gas.

## Description

### TECHNICAL FIELD OF THE INVENTION

The invention relates to a process, starting from a lignocellulosic biomass, for production of Fischer Tropsch products.

The invention more particularly relates to a process for the production of so called "bio sourced" fuels for aviation and air traffic fuels.

The invention particularly relates to a method to convert a cellulosic fraction into Fischer Tropsch products, comprising:
(i) using a lignocellulosic raw material based process for production of synthetic gas;
(ii) introducing the said syngas (of improved purity and/or quality) to a Fischer-Tropsch catalytic Synthesis (FTS) process and generating Fischer-Tropsch products.

### TECHNOLOGICAL BACKGROUND OF THE INVENTION

Syngas, or synthesis gas, is a fuel gas mixture consisting primarily of hydrogen (H₂), carbon monoxide (CO), and very often some carbon dioxide (CO₂).

Syngas (Synthetic gas) processing technology applications can generally be defined as industrial processing systems that accept a syngas source and produce or synthesize something from it.

Normally, these can be categorized into systems that generate hydrogen, ethanol, mixed alcohols, methanol, dimethyl ether, chemicals or chemical intermediates (plastics, solvents, adhesives, fatty acids, acetic acid, carbon black, olefins, oxochemicals, ammonia, etc.), Fischer-Tropsch products (LPG, Naptha, Kerosene, Diesel, lubricants, waxes), synthetic natural gas, and/or power (heat or electricity).

Various and numerous syngas processing technologies exist, each converting syngas into something, and each possessing its own unique synthesis gas cleanliness requirement.

In order to reduce dependency on crude fossil oil, a huge amount of research is in progress to convert part of agricultural products (lignocellulose biomass), preferably not including products suitable for the human food chain, into a required liquid fuel. Fischer-Tropsch synthesis constitutes one of the routes to this end.

The FT process (Fischer Tropsch synthesis (FTS)), developed in 1923, is a series of catalyzed chemical reactions that convert a mixture of CO and H₂ into hydrocarbons.

In the main FT reaction

2H₂(g) + CO(g) -> -CH₂- + H₂O(g)

the -CH2- is the chain growth molecule on which higher hydrocarbons build.

For alkanes among which for kerosene

(2n+1)H₂ + nCO → CnH₂n+2 + nH₂O.

Two main chemical characteristics of FTS are the unavoidable production of a wide range of hydrocarbon products (olefins, parafins and oxygenated products) and the liberation of a large amount of heat from the highly exothermic synthesis reactions.

The products compositions are influenced by temperature, feed gas composition (H₂/CO ratio), pressure, catalyst type and catalyst composition.

As a result of hydrogenation of carbon monoxide, and consequently polymerization of carbide metal, a wide range of products (hydrocarbons, oxygenates and water) might be produced with a vast distribution in carbon number.

A Fischer-Tropsch catalytic Synthesis processing technology (FTS) requires more stringent cleanliness requirements when compared to a methanol synthesis application. This is because some FT cobalt catalysts are extremely sensitive to sulphur, resulting in deactivation, whereas sulphur does not pose a problem for some catalytic methanol applications.

Therefore, a vast array of permutations or combinations of syngas clean-up operational sequence steps are required and appear necessary to meet the economical and process intensive demands of synthesis gas conversion technologies for producing Fischer-Tropsch products.

Fischer-Tropsch based Biomass to Liquids (BTL) processes are alternative energy production processes. These processes aim at converting lignocellulosic biomass possibly in co-processing with various biomass raw material or residues into synthetic biofuels. A gasification step converts the feedstock into a synthesis gas (CO and H₂ mixture), which undergoes the Fischer-Tropsch reaction after CO/H₂ ratio adjustment and CO₂ removal.

The feedstocks variety implies significant variations of the composition of the synthesis gas affecting the nature of the impurities that are present.

Synthesis gas contains various impurities that must be removed in order to prevent the Fischer-Tropsch catalyst poisoning. Due to high FT catalyst sensitivity, syngas specifications regarding its purity are required. For these reasons, synthesis gas purification constitutes a major challenge for the development of BTL processes.

The synthetic gas produced by the gasification of carbonaceous feedstocks, such as biomass, consists mainly in H₂, CO, CO₂ and H₂O.

The synthetic gas composition can be adjusted to the needs of the FT synthesis that requires specific CO/H₂ ratio. For example, the synthetic gas may undergoes a water gas shift conditioning step (i.e. a CO conversion into H₂ and CO₂ using steam). CO₂ inert gas removal might then be achieved through an acid-gas removal step, performed using solvent scrubbing.

Some other chemical species are found in synthesis gases, resulting from compounds initially present in the primary feedstock. These are mainly H₂S, COS, HCN, NH₃, HCI, Hg and metal carbonyls. A multi-step purification of the syngas is thus required, to ensure a deep removal of trace contaminants remaining in the syngas downstream acid gas removal section.

There is a general need to reduce the carbon dioxide emissions of vehicles, and particularly of jets or other aviation vehicles, by replacing "fossil" fuels such as kerosene or other "jet fuels", by "biosourced" fuels also called biofuels, such as the so called "bio kerosene".

Fuels derived from plant biomass also emit carbon dioxide, but the carbon thus released was already present in the atmosphere.

Biofuels have thus appeared attractive from the point of view of carbon dioxide emissions.

Energy, fuel and chemical production from biomass is increasingly attracting interest in the world. Gasification of biomass can produce raw syngas which contains CO, CO₂, H₂ and CH₄. In addition, raw syngas contains minor but significant quantities of undesirable impurities, collectively known as syngas contaminants. Syngas contaminants are composed of tars, nitrogen based compounds (NH₃, HCN, etc.), sulfur based compounds (H₂S, COS, etc.), hydrogen halides (HCI, HF, etc.) and trace metals (Na, K, etc.).

Raw syngas cleanup is an essential step prior to syngas utilization in downstream applications. In recent years, significant research attention has been devoted to syngas cleanup to reduce contaminants below tolerable limits.

In general, biomass is ascribed to the non-fossilized and biodegradable organic materials that have been derived from plants, animals and micro-organisms. The products of decomposition of non-fossilized organic materials are also referred to as biomass. The botanical (plant species) or biological (animal wastes and carcass) sources of biomass could be classified into agricultural, forest, municipal, energy and biological sources.

The process of conversion of carbon dioxide into the botanical biomass (carbohydrate) in the presence of chlorophyll and water is well known. Green plants break down the water in the presence of a particular wavelength of solar energy to obtain electrons and protons so that the carbon dioxide is converted into glucose (C₆ H₁₂ O₆). For each mole of carbon dioxide absorbed, one mole of oxygen is released.

Cellulose, hemicelluloses and lignin are the three major constituents of non-starch and fibrous lignocellulose biomass. Unlike lignocellulose, carbohydrates are dissolved easily and could be converted into liquid fuels quickly.

A lignocellulosic vegetable raw material is for example available in mass when one considers the lignocellulosic residues in logging and in the production of palm or palm trees, or the production of rice straw and cereal straw at large, or the bagasse in the sugar industry. In these two cases, a very abundant raw material is available for carrying out the process according to the invention which, to date, finds no profitable industrial use and under environmentally acceptable conditions for the production of energy, and for example for the production "in situ" of electricity.

In such a general context, it has been proposed in US-A1-2012/0202260 (LIGNOL) a process for concurrent recovery of lignin derivatives and synthetic gas (syngas) from a lignocellulosic feedstock according to a "Hybrid bio refining and gasification of lignocellulosic feedstocks".

After separation of the lignins and gasification of the "solids streams" and of the "Semi-solid and solid wastes" to produce syngas using conventional gasification equipment, it is proposed to process the syngas in order to produce various types of fuels such as Biodiesel, Butanol, Ethanol, Methanol, etc.

This document proposes using the combustible syngas through further processing to recover therefrom at least one of alkanes, olefins, oxygenates and biodiesel.

More precisely, the further processing comprises at least one Fischer-Tropsch reaction by application of the Fischer-Tropsch process known to those skilled in these arts.

Theoretically, syngas is composed of equimolar amounts of hydrogen H₂ and carbon monoxide CO.

According to prior art techniques, the syngas obtained from gasification of lignocellulosic biomass is composed of impurities as dust, tar, halogen and alkali compounds with inorganic impurities, being hydrogen sulfide H₂S, ammonium NH₃, hydrogen chloride HCI, methane and other light hydrocarbon C₂H₆ contaminants of catalysts in downstream processes and specific cleaning operations and process are required to remove such contaminants.

The maximum tolerated level of contaminating gases, in a "purified" synthetic gas for FTS process, is evaluated in parts per "billions" (i.e. 10⁻⁹), whereas a synthetic gas derived from the "unpurified" biomass contains these contaminants in parts per "millions" (i.e. 10⁻⁶), i.e. in a concentration a thousand times higher than what is required.

A time consuming and very expensive gas cleaning is thus required to remove contaminants and provide a syngas within specifications for downstream processes and syngas utilization, while a gas conditioning system is required to eliminate main gas compounds and adjust the H₂/CO ratio.

The main steps here are reforming of hydrocarbons, CO-shift to adjust the H₂/CO ratio and removal of CO₂.

After such time consuming and expensive gas treatment by cleaning and conditioning, syngas obtained from lignocellulosic biomass is chemically similar (CO, H₂) to syngas derived from fossil sources and can replace its fossil equivalent in all applications.

Thus, there is a global need for a method and a pathway for the treatment of lignocellulosic biomass, and in particular wastes from agricultural production and from the forest industry, which makes it possible to valorize a part of the components of the lignocellulosic biomass in a pure synthetic gas for using it in a Fischer-Tropsch catalytic Synthesis (FTS) process and generating Fischer-Tropsch products.

### SUMMARY OF THE INVENTION

The invention proposes a method to convert a cellulosic fraction into Fischer Tropsch products, comprising:
(i) using a lignocellulosic raw material based process for production of synthetic gas;
(ii) introducing the said syngas to a Fischer-Tropsch (FT) catalytic synthesis (FTS) process and generating Fischer-Tropsch products,
   wherein said synthetic gas production process comprises the following steps:
   a) extracting lignins and hemicelluloses by putting at least one solid lignocellulosic raw material in contact with a mixture, composed of at least water and formic acid, at atmospheric pressure under controlled conditions of temperature between 80°C and 110°C, with a dilution ratio of said at least one solid lignocellulosic raw material/liquid mixture comprised between 1 and 15, and for a determined period of time, depending on the nature of the at least one lignocellulosic raw material;
   b) fractionating, at atmospheric pressure, the primary raw cellulose solid fraction (PSF) and the primary liquid fraction (PLF) obtained at the end of the preceding extraction step a);
   c) recovering by evaporation-condensation of all or part of organic acids contained in said primary liquid fraction (PLF) and obtaining an intermediate liquid fraction (ILF);
   d) separating the lignins from said intermediate liquid fraction (ILF), for example by precipitation by adding water, and obtaining a residual liquid fraction (RLF);
   e) gasifying at least part of said primary solid fraction (PSF) for producing synthetic gas.

According to other features and aspects of the invention:
- the method comprises an additional step for recovering by evaporation-condensation of all or part of organic acids contained in said primary liquid fraction (RLF);
- said gasification step e) consists in gasifying said primary solid fraction (PSF) for producing synthetic gas;
- said mixture is composed only of water and of formic acid;
- said mixture is composed of at least water, formic acid and acetic acid in very small amounts, including at least acetic acid generated during the extraction step a);
- said temperature is between 80°C and 90°C, preferably equal to 85°C;
- during said extraction step a), said at least one solid lignocellulosic raw material is put in the presence of said mixture for a period of time comprised between 2 hours and 6 hours;
- the synthetic gas is composed of equimolar amounts of hydrogen (H₂) and carbon monoxide (CO);
- said Fischer-Tropsch products are Fischer-Tropsch fuels, particularly fuels for the aviation, particularly jet fuels;
- after said fractionation step a), the residual lignin present in said primary solid fraction (PSF) is around 4% among about 95% of cellulose;
- before said gasification step e), the primary solid fraction (PSF) is subjected to an additional alkaline extraction step for removing residual silica and/or residual lignins.

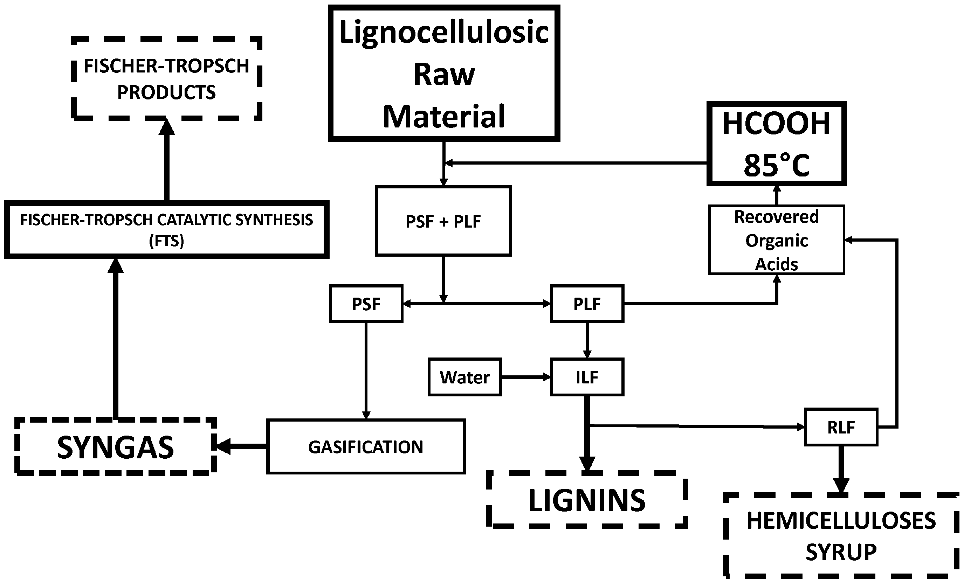

### BRIEF DESCRIPTION OF THE DRAWING

The present invention will be described in conjunction with reference to the attached drawing in which the sole figure schematically illustrates the main steps of an example of an acid based organosolv production method used for producing synthetic gas from lignocellulosic raw material to be used in accordance with the invention in a Fischer-Tropsch catalytic Synthesis process (FTS) and generating Fischer-Tropsch products.

### DETAILED DESCRIPTION OF THE INVENTION

All biomasses contain cellulose, hemicelluloses and lignin in varying percentages, along with inorganic components which are the source of ash.

Cellulose (C₅ H₁₀ O₅) is a straight-chain polymer comprising anhydroglucopyranose joined with ether bonds.

Hemicelluloses are amorphous polysaccharides containing sugar units which are branched and have varied sugar types.

Lignin is the most complex constituent and is a polymer structure of phenyl propane units.

The most prominent constituent of biomass is lignocellulose, which consists of the non-starch, fibrous part of plant material. Cellulose, hemicelluloses and lignin are the three main elements of lignocellulosic biomass. The cellulose-to-lignin ratio may vary and the proportion of cellulose and hemicelluloses are directly related to the gaseous products yield, while the lignin content determines the pyrolysis oil in the product.

It has been identified that cellulose, hemicelluloses and lignin fractions (or contents) present in biomass feedstocks degrade at different temperature ranges during gasification. The variation in these constituents in biomass raw materials yields products with different calorific values. Gasification of pure cellulose does not yield water-soluble tars in the early stages.

This appears to be the consequence of the inhibition of the thermal polymerization by lignin during lignin/cellulose interactions in pyrolysis.

The rate of pyrolysis is thus directly related to cellulose fraction and inversely dependent upon lignin content in the feedstock.

### First example

An example, according to the invention, of extraction of lignins from a biomass Lignocellulosic Raw Material (LRM) using a mixture of water and formic acid (HCOOH) at low temperature and atmospheric pressure is as follows.

The first step consisted in preparing a solution of formic acid in water using a ratio in weight of 85% of formic acid and 15% of water.

In a second step, 30 grams of a dried sample of lignocellulosic feedstock (LRM) and 270 grams of the liquid mixture of formic acid in water have been introduced in a 500 milliliters glass reactor.

The liquid/solid mass ratio (Dilution ratio) was thus for example equal to 9/1.

In order to increase the contact surface between liquid and solid, the lignocellulosic raw material sample can be crushed.

At the ambient/atmospheric pressure and using an oil bath, the mixture of the acid/water solution and of the biomass lignocellulosic raw material sample is heated at a temperature between 80°C and 90°C.

This mixture is thus stirred using a mechanical stirrer with an Inox anchor to have a homogenous temperature.

Using a thermometer, the temperature has been stabilized at 85°C.

At this stabilized temperature, the reaction started and has been maintained during four hours.

This extraction step is a very low energy consuming extraction step (working at a low temperature under 110°C).

At the end of this period of time of reaction, the content of the reactor has been cooled to the ambient temperature and it contains a solid fraction and a liquid fraction.

The content of the reactor has then been filtered to separate the raw solid cellulose (constituting the Primary Solid Fraction PSF in the sense of the invention) from the liquid phase of the content constituting a first portion P1 of the Primary Liquid Fraction PLF in the sense of the invention.

The separated cellulose has been washed with formic acid and then pressed and filtered to remove in a liquid form a second portion P2 of the primary liquid fraction PLF in the sense of the invention.

First portion P1 and second portion P2 have then been mixed together to obtain the Primary Liquid Fraction PLF.

This primary liquid fraction PLF has further been concentrated under vacuum, preferably with a heating thereof between 40°C and 50°C, at a pressure of 100 milliBar (100 hPa).

This concentration phase has been maintained until the moment where the dry matter content was about 50% to 60% in weight.

At this stage, all part of the formic acid contained in the primary liquid fraction PLF are recovered and separated to obtain an Intermediate Liquid Fraction (ILF) in the sense of the invention.

It appears that some other organics acids, such as acetic acid (CH₃CO₂H) could be generated or produced during the extraction step starting with formic acid in very small amounts. After recovery, these other acids, are used in addition to the formic acid used for the above mentioned preparation of the water-acid mixture.

In order separate or "extract" the lignins from the hemicelluloses fraction in the intermediate liquid fraction ILF, warm Water has been added to the Intermediate Liquid Fraction ILF for reaching a liquid/solid mass ratio for example equal to 4/1.

For example only and with a view to enhancing the separation of the lignins from the hemicelluloses fraction, a high performance rotor/stator disperser has been used during a period of dispersion comprised between 2 and 3 minutes at a rotational speed greater than 15000 rounds per minute (rpm).

At the end of this dispersion step, it has been processed with a filtration step to separate the lignins from the hemicelluloses fraction and to obtain a Residual Liquid Fraction RLF in the sense of the invention.

The separated lignins have then been washed with warm water until a neutral pH of the filtrate has been reached.

The lignins have then been crushed and dried until reaching 94% of dry matter in weight, the drying temperature being not greater than 40°C.

### Second example

A second example of extraction according to the invention of raw paper pulp from a biomass Lignocellulosic Raw Material (LRM) using a mixture of water and formic acid (HCOOH) at low temperature and at atmospheric pressure is as follows.

The first step consisted in preparing a mixture or solution of formic acid in water using a ratio in weight of 85% of formic acid and 15% of water, i.e. a concentration of formic acid equal to 85%.

In a second step, an amount of a dried sample of lignocellulosic feedstock (LRM) and an amount of the liquid mixture of formic acid in water have been introduced in a glass reactor.

The solid/liquid ratio (i.e. Lignocellulosic feedstock/Mixture of acid and water) mass ratio (ratio in weight) was for example from 1/4 to 1/6, in order to have a minimum of contact between the acid mixture and the biomass sample.

In order to increase the contact surface between liquid and solid, the lignocellulosic raw material sample can be crushed.

At the ambient atmospheric pressure and using an oil bath, the mixture of the acid/water solution and of the biomass lignocellulosic raw material sample is heated at a temperature between 80°C and 90°C.

This mixture is thus stirred using a mechanical stirrer with an Inox anchor to have a homogenous temperature.

Using a thermometer, the temperature has been stabilized at 85°C.

At this stabilized temperature, the reaction started and has been maintained from 2 to 4 hours.

A Kappa index analysis of a sample of raw cellulose (Raw paper pulp) might be conducted on a regular basis, for example using the TAPPI standard method T236 om-99.

For example the Kappa index analysis is conducted at least every 30 minutes after the two first hours of reaction.

The Kappa index analysis might be conducted every 10 minutes after the two first hours of reaction.

When the Kappa index reaches a constant value, i.e. when its value is stabilized, the reaction (i.e. the so-called cooking period of time) is stopped.

At this stage, the content is processed for separating the raw cellulose (constituting the Primary Solid Fraction PSF in the sense of the invention) from the liquid phase of the content constituting a first portion P1 of the Primary Liquid Fraction PLF in the sense of the invention.

This separation is obtained by filtration or centrifugation.

Thereafter, the separated raw cellulose is washed with a solution composed of water and of formic acid at a concentration of formic acid between 85% and 99%.

Thereafter, the washed cellulose is processed to remove in a liquid form a second portion P2 of the primary liquid fraction PLF in the sense of the invention, by pressing and filtering, or preferably by centrifugation.

Additionally, the obtained cellulose can be washed in an additional step using only water at a temperature from 40°C to 60°C.

After this "hot" water additional washing step, the cellulose can be again centrifuged.

After washing, the pH of the cellulose is close to neutral.

The first and second portions P1 and P2 of the primary liquid fraction PLF are mixed together in a single main organic primary liquid fraction PLF.

This primary liquid fraction PLF is then concentrated under vacuum. The media has been heated at a temperature less than 50°C at a 100mBar pressure. The concentration step is maintained until obtaining organic syrup, the dry matter content of the syrup being about 50% to 60% in weight.

In order separate or "extract" the lignins from the hemicelluloses fraction in the intermediate liquid fraction ILF, warm water has been added to the intermediate liquid fraction for reaching a liquid/solid mass ratio for example equal to at least about 2/1.

With a view to enhancing the separation of the lignins from the hemicelluloses fraction, for example only, a high performance rotor/stator disperser has been used during a period of dispersion comprised between 2 and 3 minutes at a rotational speed greater than 15000 rounds/minute.

At the end of this dispersion step, it has been processed with a filtration step to separate the lignins from the hemicelluloses fraction and to obtain a residual liquid fraction RLF.

The separated lignins have then been washed with warm water until a neutral pH of the filtrate has been reached.

The lignins have then been crushed and dried until reaching at least 90% of dry matter in weight (Preferably 95%), the drying temperature being not greater than 40°C.

The re-condensed formic acid/water previously obtained can be reused, after a rectification step to reach the preferred 85% concentration, for another extraction cycle or for washing the raw cellulose.

According to this second example, depending on the nature of the raw feedstock values, corresponding values have been obtained as follows.

| **Weight of dried product** | **Rice straw** | **Birch wood** |
|---|---|---|
| (Dry matter content of the product) | | |
| **Feedstock (g)** | 44,7 (88%) | 57,8 (95%) |
| **Lignin extracted (g)** | 7,5 (96%) | 10,9 (97%) |
| **Hemicelluloses extracted (g)** | 12,7 (62%) | 15,7 (62%) |
| **Mass yield of extracted product** | 45% | 46% |
| | | |
| **Kappa index of cellulose (Tappi T236)** | 20-22 | 28-30 |
| **Residual index of cellulose (Tappi T236)** | 4% - 5% | 5% - 6% |

Because working at a low temperature under 100°C, this extraction step is a very low energy consuming step.

For example, an industrial plant using the process according to the invention, for one Ton (1T) of dry pulp, has an average energy consumption around 2MWh (+/- 20%), to be compared with the average energy consumption equal to 5 to 6MWh for a non-integrated plant using the Kraft process (the Kraft process consuming significant amounts of energy, also including energy consumed during additional steps for screening, washing and bleaching the paper pulp).

At this stage (After the above described steps of extraction and separation) the method has permitted to obtain:
A) - non-oxidized, non-degraded and uncombined lignins with a controlled aliphatic hydroxyl content and a controlled phenolic hydroxyl content; and
B) - a "compound" comprising the primary solid fraction PSF that is available and ready for direct gasification for production of syngas.

This compound of PSF available for gasification is ready for gasification in the sense that:
i) It does not contain any lignins (or in a much reduced proportion) that have been identified as inhibitor of the gasification process;
ii) it does not contain any hemicelluloses, proteins or inorganics (or in a much reduced proportion) that have been identified as sources of inhibitors during the gasification process;
iii) the gasification process is conducted on a compound containing mostly C6 sugars;
iv) the sugars in the compound are in the most favorable H/C proportion for obtaining a synthetic gas having its optimal and maximum chemical and energetic efficiency, i.e. composed of equimolar amounts of carbon monoxide CO and of hydrogen H₂;
v) for a Fischer-Tropsch catalytic Synthesis (FTS) process and for generating Fischer-Tropsch products, the syngas obtained by gasification of the compound has the advantage that syngas clean-up stages are no longer necessary or extremely reduced.

For example, in the case of contaminating volatile organic gases, the latter come from the lignin which is the aromatic source of these gases. The lignin is also responsible for the tar formed after biomass gasification.

If the levels of silica and lignin would remain too high, then - in addition to the above mentioned steps of the method according to the invention - the latter elements can be removed by alkaline extraction.

The method according to the invention can be industrially implemented using a batch technique for the extraction step a), also including stirring of the content of each batch.

This is advantageous when compared with diffusion techniques that imply long and energy consuming extraction periods.

This is also advantageous when compared with diffusion techniques that imply specific "calibration" preparation steps of the Lignocellulosic Raw Material (LRM) by cutting, crushing, micronizing, etc. depending on the plant waste used as raw material.

## Claims

1. A method to convert a cellulosic fraction into Fischer Tropsch products, comprising:
(i) using a lignocellulosic raw material based process for production of synthetic gas;
(ii) introducing the said syngas to a Fischer-Tropsch (FT) catalytic synthesis (FTS) process and generating Fischer-Tropsch products,
wherein said synthetic gas production process comprises the following steps:
a) extracting lignins and hemicelluloses by putting at least one solid lignocellulosic raw material in contact with a mixture, composed of at least water and formic acid, at atmospheric pressure under controlled conditions of temperature between 80°C and 110°C, with a dilution ratio of said at least one solid lignocellulosic raw material/liquid mixture comprised between 1 and 15, and for a determined period of time, depending on the nature of the at least one lignocellulosic raw material;
b) fractionating, at atmospheric pressure, the raw cellulose primary solid fraction (PSF) and the primary liquid fraction (PLF) obtained at the end of the preceding extraction step a);
c) recovering by evaporation-condensation of all or part of organic acids contained in said primary liquid fraction (PLF) and obtaining an intermediate liquid fraction (ILF);
d) separating the lignins from said intermediate liquid fraction (ILF), for example by precipitation by adding water, and obtaining a residual liquid fraction (RLF);
e) gasifying at least part of said primary solid fraction (PSF) for producing synthetic gas.

2. A method to convert a cellulosic fraction into Fischer Tropsch products according to claim 1, comprising an additional step for recovering by evaporation-condensation of all or part of organic acids contained in said primary liquid fraction (RLF).

3. A method to convert a cellulosic fraction into Fischer Tropsch products according to claim 1 or 2, wherein said gasification step e) consists in gasifying said primary solid fraction (PSF) for producing synthetic gas.

4. A method to convert a cellulosic fraction into Fischer Tropsch products according to claim 1, wherein said mixture is composed only of water and of formic acid.

5. A method to convert a cellulosic fraction into Fischer Tropsch products according to claim 1, wherein said mixture is composed of at least water, formic acid and acetic acid in very small amounts, including at least acetic acid generated during the extraction step a).

6. A method to convert a cellulosic fraction into Fischer Tropsch products according to claim 1 wherein said temperature is between 80°C and 90°C, preferably equal to 85°C.

7. A method to convert a cellulosic fraction into Fischer Tropsch products according to claim 1, wherein, during said extraction step a), said at least one solid lignocellulosic raw material is put in the presence of said mixture for a period of time comprised between 2 hours and 6 hours.

8. A method to convert a cellulosic fraction into Fischer Tropsch products according to anyone of the preceding claims, wherein the synthetic gas is composed of equimolar amounts of hydrogen (H₂) and carbon monoxide (CO).

9. A method to convert a cellulosic fraction into Fischer Tropsch products according to anyone of the preceding claims, wherein, after said fractionation step a), the residual lignin present in said primary solid fraction (PSF) is around 4% among about 95% of cellulose.

10. A method to convert a cellulosic fraction into Fischer Tropsch products according to anyone of the preceding claims, wherein, before said gasification step e), the primary solid fraction (PSF) is subjected to an additional alkaline extraction step for removing residual silica and/or residual lignins.

11. A method to convert a cellulosic fraction into Fischer Tropsch products according to anyone of the preceding claims, wherein said Fischer-Tropsch products are Fischer-Tropsch fuels, particularly fuels for the aviation, particularly jet fuels.
